Europäisches Patentamt

European Patent Office

Office européen des brevets

(19)

(11) Publication number: 0 383 269
A2

## (12) EUROPEAN PATENT APPLICATION

(21) Application number: 90102811.8

(51) Int. Cl.5: G06F 15/68

(22) Date of filing: 13.02.90

(30) Priority: 14.02.89 US 311121

(43) Date of publication of application:
22.08.90 Bulletin 90/34

(84) Designated Contracting States:
AT BE CH DE DK ES FR GB GR IT LI LU NL SE

(71) Applicant: ADLER RESEARCH ASSOCIATES
2333 Morris Avenue
Union, NJ 07083(US)

(72) Inventor: Manolakis, Dimitris
33 Westgate Road, A6
Chestnut Hill, MA 02167(US)
Inventor: Digalakis, Vassilios V.
22 Symphony Road, Apt. 2
Boston MA 02115(US)

(74) Representative: Strehl, Schübel-Hopf,
Groening
Maximilianstrasse 54 Postfach 22 14 55
D-8000 München 22(DE)

(54) Regionally adaptive imaging techniques.

(57) A first regionally adaptive imaging technique, for enhancing the contrast of a digital image, employs an adaptive histogram equalization technique in which the histogram associated with a contextual region is low pass filtered, prior to developing the mapping function, of original pixel intensity to adjusted pixel intensity, from the histogram. A second technique for enhancing the contrast of images within a smooth background employs a regionally adaptive filter in which the intensity of selected pixels are adjusted in accordance with a transformation which is a function of the mode of pixel intensities, and deviations from the mode of pixel intensities, within a contextual region corresponding to the selected pixel.

FIG. 2A

FIG. 3A

FIG. 2B

FIG. 3B

EP 0 383 269 A2

# REGIONALLY ADAPTIVE IMAGING TECHNIQUES

## REGIONALLY ADAPTIVE IMAGING TECHNIQUES

### FIELD OF THE INVENTION

The present invention is related to the field of imaging, and in particular to techniques for improving the quality of digitized images.

### BACKGROUND OF THE INVENTION

Certain imaging processes produce images which, in many cases, are inherently limited in quality because of various limiting factors. For example, radiographic images, such as x-ray images, may have low contrast due to dose limitations. Global enhancement techniques, in which the contents of the entire image are considered to produce a mapping function for all pixels within the image, can be employed to better utilize the dynamic range of pixel intensity and modify the image histogram, and thus increase contrast. However, the contrast may vary locally within an image; in chest x-ray images, for example, the area of the mediastinum (heart, spine, aorta, etc.) is heavily attenuated resulting in poor contrast, whereas the air filled region of the lungs has a small attenuation and much higher contrast. In this case, therefore, better utilization of the dynamic range of pixel intensity, by using global mapping techniques, can result in an image having locally poor contrast.

In order to solve this problem, it has been proposed to provide a regionally adaptive contrast enhancement in which the characteristics of a subset of the entire image, or "contextual region", are examined in order to determine a suitable mapping function for the brightness of a single pixel within the contextual region. The intensity of the pixel is adjusted accordingly, and the process is repeated for other contextual regions, to produce an individual mapping function for each pixel within the image, or for a grid of selected pixels within the image, in which case the mapping function for pixels lying between the selected pixels is determined by a suitable bilinear interpolation.

Two such regionally adaptive techniques for determining mapping functions for individual pixels are adaptive histogram equalization and adaptive filtering. These techniques in general provide good contrast enhancement, but tend to over-enhance noise within the image, and even though contrast may be enhanced, objects hidden within a smooth background may be poorly defined.

### OBJECTS AND SUMMARY OF THE INVENTION

It is therefore an object of the present invention to improve the prior art techniques of adaptive histogram equalization and adaptive filtering.

It is a further object of the present invention to provide a form of adaptive histogram equalization which does not over-enhance noise.

It is a further object of the present invention to provide a form of adaptive filtering which brings out information hidden within a smooth background.

In accordance with a first aspect of the present invention, an adaptive histogram equalization technique for enhancing the contrast of an image formed of a plurality of pixels, each having an intensity level and a location within the image, is implemented with a computer having a memory and a processor. The processor, under program control, selects a plurality of the pixels within the image, each of the selected pixels being associated with a contextual region of the image. The processor determines a histogram of frequency of occurrence versus pixel intensity for each of the contextual regions. The histograms are low pass filtered to produce a plurality of filtered histograms, and a mapping function of original pixel intensity to adjusted pixel intensity is determined for each of the filtered histograms. The intensity level of each of the selected pixels is adjusted in accordance with the mapping function associated with each selected pixel, to produce a plurality of adjusted pixel intensities, and the original pixel intensities are replaced by their associated adjusted pixel intensities, to thereby enhance the contrast of the display.

In accordance with a second aspect of the present invention, an adaptive filtering technique for enhancing the contrast of an image formed of a plurality of pixels, each having an intensity level and a location within the image, includes a computer having a memory and a processor. The processor selects a plurality of the pixels, each associated with a contextual region of the image. The mode of pixel intensities over each of the contextual regions is determined and the deviation of pixel intensities in each contextual region, from the mode in the respective contextual region, is also determined. The intensity of each selected pixel is adjusted in accordance with a transformation which is a function of the mode of pixel intensities and deviation from the mode of pixel intensities corresponding to the selected pixel, to produce an adjusted intensity for each of the selected pixels. The intensity level of each of the selected pixels is replaced with its associated adjusted pixel intensity.

## BRIEF DESCRIPTION OF THE DRAWINGS

These and other objects, aspects and embodiments of the invention will be described with reference to the following drawing figures of which:

FIG. 1 is a diagram illustrating an image formed by an n x n array of pixels, and two subsets, or contextual regions of the image, formed by m x m arrays of pixels;

FIG. 2A is an example of a histogram showing frequency of occurrence versus pixel intensity, for a contextual region;

FIG. 2B is a mapping of input intensity to adjusted intensity, based on the original histogram of FIG. 2A;

FIG. 3A is a filtered version of the histogram of FIG. 2A;

FIG. 3B is a mapping function based on the histogram of FIG. 3A;

FIG. 4 is a diagram illustrating an implementation of the adaptive histogram equalization technique in accordance with a first aspect of the present invention;

FIG. 5 is a graph illustrating x-ray film density versus the logarithm of film exposure;

FIG. 6 is a diagram illustrating an implementation of the regionally adaptive filtering technique in accordance with a second aspect of the present invention;

FIG. 7A is an example of a histogram of a contextual region;

FIG. 7B is an illustration of the histogram of FIG. 7A after mean centered filtering; and

FIG. 7C is an illustration of the histogram of FIG. 7A after the regionally adaptive filtering in accordance with the second aspect of the present invention.

## DETAILED DESCRIPTION OF THE INVENTION

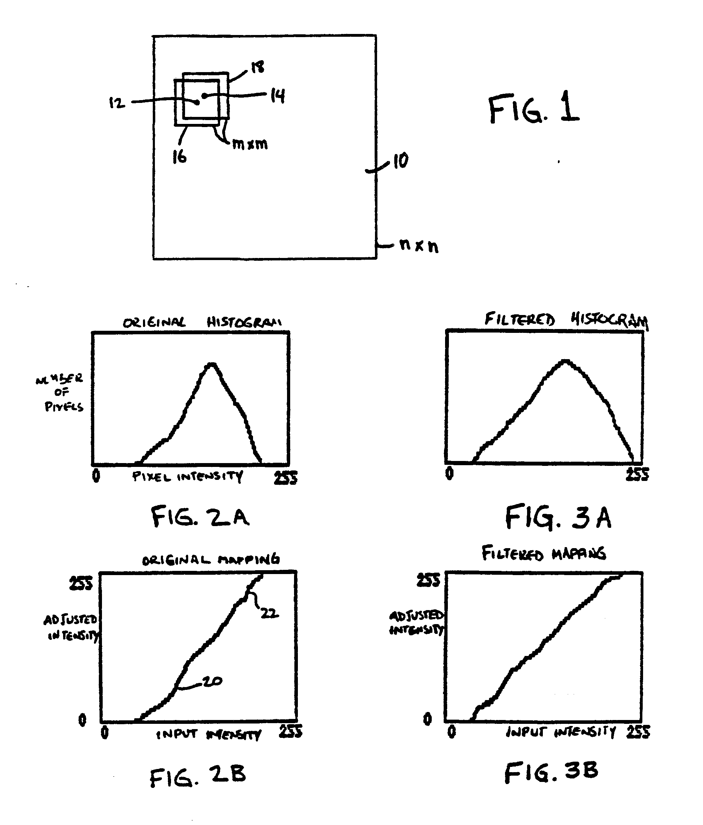

With reference to FIG. 1, an image to be displayed within area 10 of a monitor, such as a CRT, is composed of an n x n array of digitized picture elements, or "pixels", two of which, 12 and 14, are illustrated. Each pixel is associated with at least two pieces of information, namely, its location within the image (usually a function of its location in memory) and intensity.

Surrounding each pixel is a contextual region forming a subset of the image 10. Specifically, pixel 12 is centered within contextual region 16 while pixel 14 is centered within contextual region 18. The contextual regions 16 and 18, for the purposes of this example, are composed of an m x m array of pixels. It should be noted that although the image 10 and contextual regions 16 and 18 are disclosed as being square, this need not necessarily be the case, since other geometries, such as rectangular or hexagonal regions and images, can also be used in accordance with the present invention. It has been found that contextual regions having areas from $\frac{1}{16}$ - $\frac{1}{64}$ of the total image area provide good results.

It is desired to adjust the intensity levels of the pixels, as a function of their original intensities, in order to improve the contrast of the image. Rather than considering the intensity content of all of the pixels within the image 10, to determine a single intensity adjustment for all of the pixels in the image, only those pixels within a contextual region are considered in determining an intensity adjustment to the single pixel that corresponds to the contextual region. For example, in order to regionally adjust the intensity level of pixel 12, contextual region 16 is studied, and based on the pixel intensities within that contextual region, the original intensity of pixel 12, is mapped into a second, usually different intensity. By repeating this technique for all pixels within the image 10, or for a selected grid of pixels with a suitable bilinear interpolation between the selected pixels, the contrast of the image can be significantly improved.

The present invention is directed to the particular mapping techniques employed to adjust the intensity

4

of a pixel within a contextual region, and can be divided into two categories: (1) adaptive histogram equalization, and (2) adaptive filtering, which will be discussed separately below.

## ADAPTIVE HISTOGRAM EQUALIZATION

Adaptive histogram equalization requires the calculation of the histogram of frequency of occurrence versus pixel intensity within the contextual region to determine the intensity mapping for the associated pixel. One such histogram is shown in FIG. 2A. Based on this histogram, a mapping function, shown in FIG. 2B, is determined from the following formula:

Mapping Function = (Display Range* Cumulative Histogram)/Region Size        (1)

The histogram is therefore related to the derivative of the mapping function. The intensity of the pixel corresponding to the contextual region is then adjusted in accordance with the mapping function of FIG. 2B and the process is repeated for every pixel, or for a selected grid of pixels with a suitable interpolation being performed therebetween. The result of this process is an adjusted intensity which will result in an overall improvement of contrast, by emphasizing the high frequency components of the image. However, the use of the mapping function of FIG. 2B in many cases over-enhances noise. This results from areas of the mapping function having high slopes, such as areas 20 and 22 in FIG. 2B, where successive input image intensities are mapped to output intensities having a large difference.

Since the histogram is related to the derivative of the mapping function, merely limiting the slope of the mapping function is not always an acceptable solution, since it is equivalent to clipping the height of the histogram, and since the clipping operation involves thresholds (clipping levels) which may not be suitable for images with different dynamic ranges. For example, clipping the histogram of an image with a small intensity range, as in low dose x-ray images, would result in poor contrast enhancement.

In accordance with the first aspect of the present invention, it has been found that by low pass filtering the histogram (for example, by applying a running average to the histogram) a mapping is produced which does not over-enhance noise, and which is more adaptive to various dynamic ranges than the prior art. For example, FIG. 3A represents the original histogram of FIG. 2A which has been filtered using a running average of pixel frequency of occurrence, five intensity levels wide. This results in a wider histogram and a reduction or elimination of spikes and an overall lower slope in the associated mapping function, shown in FIG. 3B. As a result, the contrast of the overall image is enhanced, without over-enhancing image noise.

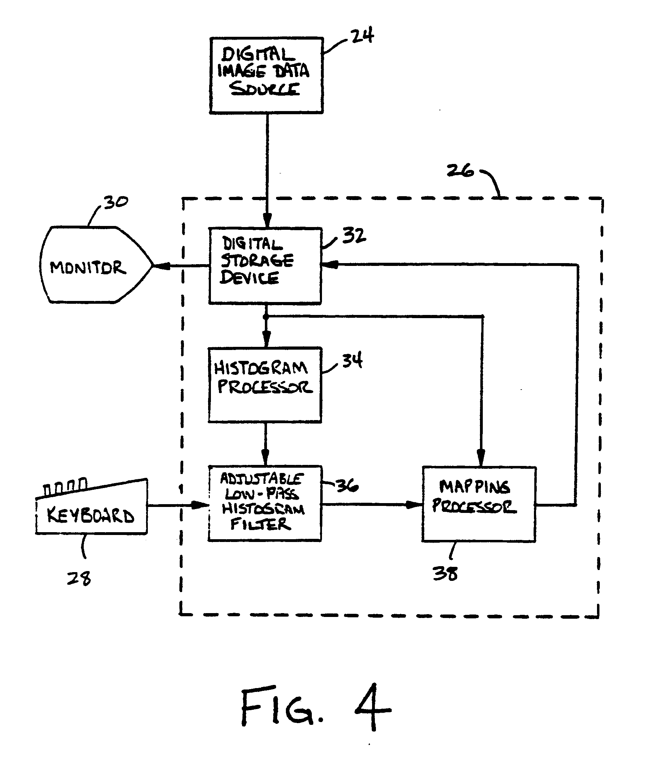

An implementation of the regionally adaptive histogram equalization technique of the present invention will now be described with reference to FIG. 4. The components shown therein include a digital image data source 24, a computer 26, a keyboard 28 and a monitor 30. Examples of images provided by the source 24 include radiographic images, and the data source 24 can be the direct digital output of an x- ray diagnostic apparatus, or from a scanner which digitizes a pre-existing photographic x-ray, or from a memory source, such as another computer, floppy disk, or the like.

The image data are input to a digital storage device 32, such as random access memory and/or a hard disk, and the computer provides an output to the monitor 30 on which the image can be displayed. The image data are delivered from storage device 32 to a histogram processor 34 which functions to select certain or all pixels, and for each such pixel develop a histogram, such as that shown in FIG. 2A, based on its associated contextual region. Each such histogram is applied to the adjustable low pass histogram filter 36, resulting in a filtered histogram, such as that shown in FIG. 3A. Based on the filtered histogram, the mapping function, shown in FIG. 3B, for example, is determined in accordance with Equation (1), above, in mapping processor 38. The intensity of the pixel associated with the mapping function is delivered from the digital storage device 32 to the mapping processor 38 where an adjusted intensity for that pixel is determined by the mapping function of FIG. 3B. The pixel intensity is then reapplied to the digital storage device 32 where it replaces the original intensity for that pixel. This process is repeated either for all pixels, or for selected pixels, with the mapping function for pixels between selected pixels being determined by bilinear interpolation, until the entire image has been adjusted.

A keyboard 28 is connected to the computer 26 so that, in an interactive environment, the physician can view the enhanced image on monitor 30, and then vary certain parameters of the filter 36, such as the size of the window of the running average, and view the result, in order to emphasize certain organs, adjust the contrast, smooth or sharpen the image. Furthermore, when used in conjunction with the parallel processing technique described in the above mentioned co-pending patent application, the results of such modifications are available almost instantaneously to the physician, who can then fine tune the filter parameters as desired.

It should be noted that although shown in discrete form within computer 26, the histogram processor 34, adjustable low pass histogram filter 36, and mapping processor 38 will typically be implemented through the use of a suitable computer program, which can readily be prepared by those skilled in the art in view of the foregoing description.

## REGIONALLY ADAPTIVE FILTERING

In regionally adaptive filtering for contrast enhancement, a widely used transformation is of the form

$$f_o(x,y) = \frac{f_i(x,y) - \bar{f}(x,y)}{(\sigma_{x,y}/\sigma_D) + (1/A)} + \alpha\mu_D + (1-\alpha)\,\bar{f}(x,y) \qquad (2)$$

where $f_i(x,y)$ is the original pixel intensity, $f_o(x,y)$ is the adjusted pixel intensity, $\mu_D$ is the desired local mean over the contextual region, $\sigma_D$ is the desired local standard deviation from the mean over the contextual region, $\bar{f}(x,y)$ is the local mean intensity over the contextual region, $\sigma_{x,y}$ is the local deviation over the contextual region, $\alpha$ is a constant between 0 and 1, and A is a constant set by the user, as a function of the size of the contextual region. The selection of the values of $\alpha$ and A are well known in the art.

By observing the transformation employed by the adaptive filter in Equation (2) above, it will be appreciated that the contrast is defined with respect to the mean of the pixel intensities in the contextual region. Although this enhancement is acceptable for many images, there are some images with a fairly uniform, smooth background in which it is desired to reveal hidden information. Radiographic images are examples of images in this category.

The uniform background of a contextual region usually corresponds to the peak, or mode of the associated histogram since most pixels in the contextual region will have the intensity value of the background. In some cases, the mean intensity in this region may be almost the same as the histogram peak, or in other cases may be considerably different from the histogram peak. In accordance with the second aspect of the present invention, it has been found that by using the histogram peak or mode, as opposed to the mean, in the adaptive filter described above, much more information is revealed in the background as compared to prior art techniques. This aspect of the present invention employs an adaptive filter having the following form:

$$f_o(x,y) = \frac{f_i(x,y) - f_{peak}(x,y)}{(\sigma_{xy}/\sigma_D) + (1/A)} + \alpha\mu_D + (1-\alpha)\,f_{peak}(x,y) \qquad (3)$$

The parameters $\alpha$ and A are the same as in Equation (2). The parameter $f_{peak}(x,y)$ is the value of the histogram peak (mode) intensity, $\mu_D$ is the desired local mode within the contextual region, $\sigma_D$ is the desired deviation from the mode within the contextual region, and the deviation $\sigma'_{x,y}$ is defined as

$$(\sigma'_{x,y})^2 = \frac{\Sigma\,(f_i(x,y) - f_{peak}(x,y))^2}{A} \qquad (4)$$

where A is the contextual region, and where the summation is over the entire contextual region.

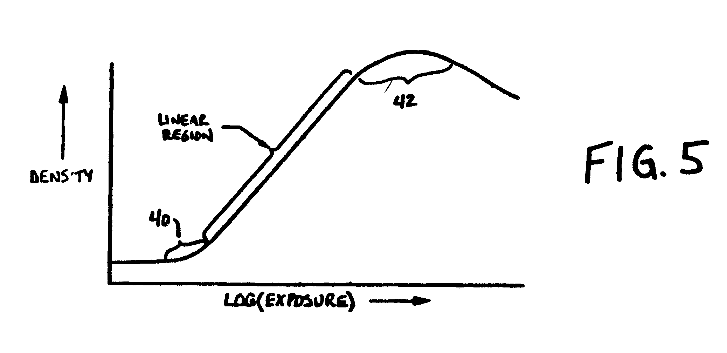

Another common problem encountered when the source of radiographic data is a photographic image is due to the nonlinear relationship between film exposure and image density. Objects with lower intensity levels than the background intensity may have poorer contrast than objects with intensity levels higher than background, or visa versa, depending on the background intensity. This can occur in low dose x-ray images which fall in the non-linear region of the exposure-density curve. This is shown in FIG. 5, which is a plot of image density versus the logarithm of film exposure.

With reference to FIG. 5, the problem of low intensity objects having poorer contrasts than higher intensity levels can occur where the range of exposure overlaps the nonlinear region of the curve as, for example, at region 40. On the other hand, in certain circumstances the higher intensities may fall within nonlinear region 42. Adaptive filters having the forms set forth in Equations (2) or (3) enhance the contrast equally for intensities above and below the center intensity. As demonstrated by FIG. 5, nonlinearities can result in over-enhancement of one range and under-enhancement of the rest.

In order to overcome this problem the present invention employs a non-symmetric contrast enhancement technique, which uses left and right deviations, which result in different mappings for intensities above and below the histogram peak intensity. Assuming a dynamic range of pixel intensity to be from 0 to N and the histogram of the contextual region to be computed as h(i), i = 0,...N, then we can define

$$(\sigma_L)^2 = \frac{\sum\limits_{i=0}^{f_{peak}} h(i)(i-f)^2}{\sum\limits_{i=0}^{f_{peak}} h(i)} \tag{5A}$$

and

$$(\sigma_H)^2 = \frac{\sum\limits_{i=f_{peak}+1}^{N} h(i)(i-f)^2}{\sum\limits_{i=f_{peak}+1}^{N} h(i)} \tag{5B}$$

The final adaptive filter is given by Equation (3), by replacing $\sigma'_{x,y}$ by $\sigma_L$ for intensity values lower than $f_{peak}$ and by $\sigma_H$ for intensity values greater than $f_{peak}$.

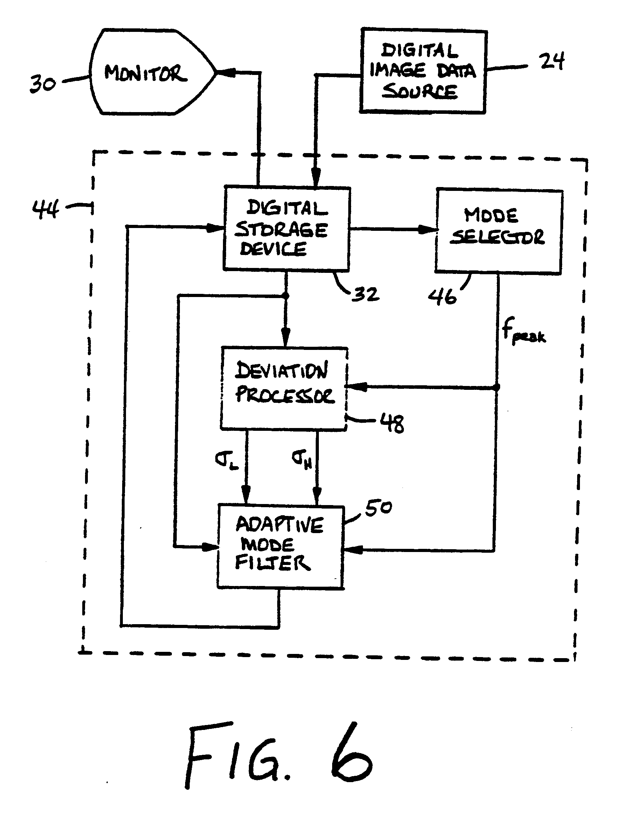

An implementation of the adaptive filter technique will now be discussed with reference to FIG. 6. This implementation employs a digital image data source, such as that described with reference to FIG. 4, a computer 44 and a monitor 30. The digital image data from source 24 is delivered to a digital storage device 32, such as that described with reference to FIG. 4, within computer 44. Image data for a contextual region, from storage device 32, is applied to a mode selector 46, which selects the mode of pixel intensities ($f_{peak}$) within the contextual region. The mode is delivered from mode selector 46 to a deviation processor 48 and an adaptive mode filter 50. The deviation processor also receives the original pixel intensities within the contextual region from digital storage device 32 and calculates the high and low standard deviations $\sigma_L$ and $\sigma_H$, in accordance with Equations (5A) and (5B). The high and low deviations are applied to the adaptive mode filter 50 which, in addition to the value of $f_{peak}$, also receives the original pixel intensity from digital storage device 32. The adaptive mode filter 50 adjusts the intensity of the pixel as described above. The foregoing technique is repeated for each pixel, or for selected pixels, with interpolations being performed therebetween.

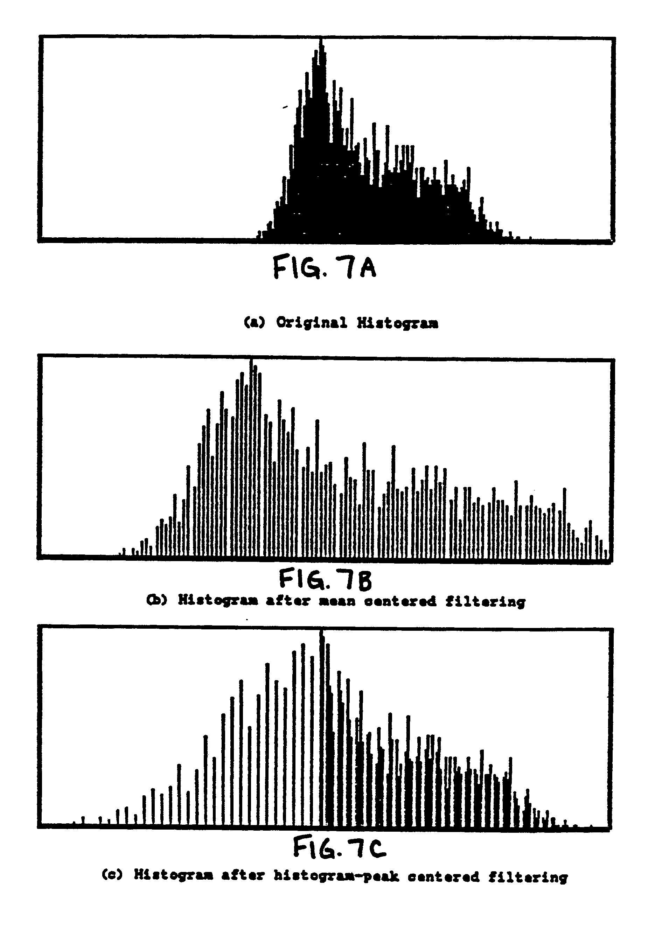

A comparison of the adaptive mode filtering technique, in accordance with the present invention, with the prior art adaptive mean filtering will be made with reference to FIGS. 7A-7C. FIG. 7A is an illustration of the original histogram of a contextual region of a radiological image. Through use of the adaptive mean filtering technique, as performed by the prior art, the dynamic range of the original histogram is increased, as shown in FIG. 7B, but the histogram of FIG. 7B reflects the same asymmetry as the original histogram of FIG. 7A. FIG. 7C, on the other hand, illustrates the histogram produced by applying the contextual region to the adaptive mode filtering technique described above, and illustrated in FIG. 6. It will be appreciated by those skilled in the art that the resulting histogram in FIG. 7C has a more canonical shape and utilizes the available dynamic range more effectively than that of FIG. 7B.

As in the case of the description of FIG. 4, the mode selector 46, deviation processor 48, and adaptive mode filter 50 will typically be implemented through the use of a suitable computer program, which can be readily prepared by those skilled in the art in view of the foregoing description.

Thus, in accordance with the first aspect of the present invention, the contrast of images is enhanced, without over-enhancing noise, and in accordance with the second aspect of the invention, features ordinarily hidden in a smooth background of an image are revealed. Although described with reference to radiological images, as an example, the techniques of the present invention may be employed with other types of images as well.

Various other changes and variations to the present invention will occur to those skilled in the art in

EP 0 383 269 A2

view of the foregoing description. It is intended that such changes and variations be encompassed, so long as the present invention is employed, as defined by the following claims.

**Claims**

1. A method for enhancing the contrast of an image formed of a plurality of pixels, each having an intensity level and a location within said image, comprising:
storing intensity levels of said plurality of pixels in a memory device;
selecting a plurality of pixels, each of said selected pixels associated with a contextual region of said image;
determining a histogram of frequency of occurrence versus pixel intensity for each of said contextual regions;
low pass filtering each of said histograms to produce a plurality of filtered histograms;
determining a mapping function of the original pixel intensity to adjusted pixel intensity for each of said filtered histograms;
adjusting the intensity of each of the selected pixels in accordance with the mapping function associated with each selected pixel, to produce a plurality of adjusted pixel intensities; and
replacing, in said memory device, the intensity level of each of said selected pixels with its associated adjusted pixel intensity.

2. The method of claim 1, further comprising the steps of
monitoring said image after replacing said selected pixels with said adjusted pixels; and
interactively changing one or more low pass filter parameters employed during said step of low pass filtering.

3. The method of claim 1 wherein said step of low pass filtering includes the step of determining a running average of frequency of occurrence as a function of pixel intensity.

4. An apparatus for enhancing the contrast of an image (10) formed of a plurality of pixels (12, 14) each having an intensity level and a location within said image, comprising a computer (26) having:
a memory device (32) for storing intensity levels of said pixels (12, 14) which form said image (10), and
a processor (34, 36, 38) for (i) selecting a plurality of said pixels (12, 14), each of said selected pixels associated with a contextual region (16, 18) of said image (10), (ii) determining a histogram of frequency of occurrence versus pixel intensity for each of said contextual regions, (iii) low pass filtering each of said histograms to produce a plurality of filtered histograms, (iv) determining a mapping function of original pixel intensity to adjusted pixel intensity for each of said filtered histograms, (v) adjusting the intensity of each of the selected pixels in accordance with the mapping function associated with each selected pixel, to produce a plurality of adjusted pixel intensities, and (vi) replacing, in said memory device (32), the intensity level of each of said selected pixels with its associated adjusted pixel intensity.

5. The apparatus of claim 4 further comprising a monitor (30) connected to said computer (26) for displaying said image (10), and a manual input device (28) for changing parameters of said processor (34, 36, 38) to effect changes in said low pass filtering of said histograms.

6. The apparatus of claim 4, wherein said processor (34, 36, 38) determines a running average of frequency of occurrence, as a function of pixel intensity, to provide said low pass filtering of said histogram.

7. A method for enhancing the contrast of an image formed of a plurality of pixels each having an intensity level and a location within said image, comprising:
storing intensity levels of said plurality of pixels in a memory device;
selecting a plurality of said pixels, each of said selected pixels associated with a contextual region of said image;
determining the mode of pixel intensities over each of said contextual regions;
determining the deviation of pixel intensities, in each contextual region, from the mode in the respective contextual region;
adjusting the intensity of each selected pixel in accordance with a transformation which is a function of the mode of pixel intensities and deviation from the mode of pixel intensities, in the contextual region corresponding to the selected pixel, to produce an adjusted intensity for each of said selected pixels; and
replacing, in said memory device, the intensity level of each of said selected pixels with its associated adjusted pixel intensity.

8. The method of claim 7, wherein said step of determining the deviation of pixel intensities includes the steps of
determining a first deviation of pixel intensities from the mode, for pixels having an intensity lower than the mode, and

8

determining a second deviation of pixel intensities from the mode, for pixels having an intensity greater than the mode,

and wherein said step of adjusting the intensity of each selected pixel, includes the steps of

adjusting the intensities of said selected pixels having intensities less than the mode in accordance with a first transformation which is a function of the first deviation; and

adjusting the intensities of said selected pixels having intensities greater than the mode in accordance with a second transformation which is a function of the second deviation.

9. An apparatus for enhancing the contrast of an image (10) formed of a plurality of pixels (12, 14), each having an intensity level and a location within said image, comprising a computer (44) having:

a memory device (32) for storing intensity levels of said pixels (12, 14) which form said image (10), and

a processor (46, 48, 50) for (i) selecting a plurality of said pixels (12, 14) each associated with a contextual region (16, 18) of said image (10), (ii) determining the mode of pixel intensities over each of said contextual regions, (iii) determining the deviation of pixel intensities, in each contextual region, from the mode in the respective contextual region, (iv) adjusting the intensity of each selected pixel in accordance with a transformation which is a function of the mode of pixel intensities, and deviation from the mode of pixel intensities, in the contextual region corresponding to the selected pixel, to produce an adjusted intensity for each of said selected pixels, and (v) replacing, in said memory device (32), the intensity level of each of said selected pixels with its associated adjusted pixel intensity.

10. The method of claim 7 or the apparatus of claim 9, wherein said transformation is in accordance with the relationship:

$$f_o(x,y) = \frac{f_i(x,y) - f_{peak}(x,y)}{(\sigma'_{xy}/\sigma_D) + (1/A)} + \alpha\mu_D + (1-\alpha) f_{peak}(x,y)$$

where $f_i(x,y)$ is the original intensity, $f_o(x,y)$ is the adjusted intensity, $f_{peak}(x,y)$ is the intensity of the mode within said contextual region, $\mu_D$ is the desired mode within said contextual region, $\sigma_D$ is the desired deviation from the mode within said contextual region, $\sigma'_{x,y}$ is the deviation from the mode within said contextual region, and A and $\alpha$ are constants.

11. The apparatus of claim 9, wherein said processor (46, 48, 50) (a) determines a first deviation from the mode, for pixels having an intensity lower than the mode, (b) determines a second deviation of pixel intensities from the mode, for pixel intensities greater than the mode, (c) adjsuts the intensities of said selected pixels having intensities less than the mode in accordance with a first transformation which is a function of the first deviation, and (d) adjusts the intensities of said selected pixels having intensities greater than the mode, in accordance with a second transformation which is a function of the second deviation.

12. The method of claim 8 or the apparatus of claim 11, wherein said first transformation is in accordance with the relationship:

$$f_o(x,y) = \frac{f_i(x,y) - f_{peak}(x,y)}{(\sigma_L/\sigma_D) + (1/A)} + \alpha\mu_D + (1-\alpha) f_{peak}(x,y)$$

and said second transformation is in accordance with the relationship:

$$f_o(x,y) = \frac{f_i(x,y) - f_{peak}(x,y)}{(\sigma_H/\sigma_D) + (1/A)} + \alpha\mu_D + (1-\alpha) f_{peak}(x,y)$$

where $f_i(x,y)$ is the original intensity, $f_o(x,y)$ is the adjusted intensity, $f_{peak}(x,y)$ is the intensity of the mode within said contextual region, $\mu_D$ is the desired mode within said contextual region, $\sigma_D$ is the desired deviation from the mode within said contextual region, $\sigma_L$ is the first deviation and $\sigma_H$ is the second deviation within said contextual region, and A and $\alpha$ are constants.

13. The method of any one of claims 1 to 3, 7, 8, 10 and 12 or apparatus of any one of claims 4 to 6 and 9 to 12, wherein said image is a radiological image.

FIG. 1

FIG. 2A

ORIGINAL HISTOGRAM

NUMBER OF PIXELS

PIXEL INTENSITY

0 · · · 255

FIG. 3A

FILTERED HISTOGRAM

0 · · · 255

FIG. 2B

ORIGINAL MAPPING

ADJUSTED INTENSITY

INPUT INTENSITY

0 · · · 255

FIG. 3B

FILTERED MAPPING

ADJUSTED INTENSITY

INPUT INTENSITY

0 · · · 255

FIG. 4

FIG. 5

DENSITY

LINEAR REGION

40

42

LOG(EXPOSURE)

EP 0 383 269 A2

FIG. 6

## FIG. 7A

(a) Original Histogram

## FIG. 7B

(b) Histogram after mean centered filtering

## FIG. 7C

(c) Histogram after histogram-peak centered filtering